# EUROPÄISCHE PATENTSCHRIFT

(11) **EP 2 970 555 B1**
(45) Veröffentlichungstag und Bekanntmachung des Hinweises auf die Patenterteilung: **21.11.2018**
(21) Anmeldenummer: 14711709.7
(22) Anmeldetag: 12.03.2014
(51) Int. Cl.: C08G 18/48, B29C 73/02, C08K 5/00, C08G 18/08, C08G 18/10

(54) **REPARATURFLÜSSIGKEIT FÜR FÖRDERBÄNDER**
REPAIRING FLUID FOR CONVEYOR BELTS
LIQUIDE DE RÉPARATION POUR BANDES DE TRANSPORT

(30) Priorität: 15.03.2013 EP 13159610
(43) Veröffentlichungstag der Anmeldung: 20.01.2016
(73) Patentinhaber: Sika Technology AG, 6340 Baar (CH)
(72) Erfinder: MUÑOZ, Hector, Santiago 8520947 (CL); GALLEGOS, Pedro, Santiago 7571706 (CL); HAACK, Thomas, Santiago 7790321 (CL)
(74) Vertreter: Sika Patent Attorneys
(86) Internationale Anmeldenummer: PCT/EP2014/054850
(87) Internationale Veröffentlichungsnummer: WO 2014/140106

(56) Entgegenhaltungen:
- WO-A2-2012/029029
- US-A- 4 071 492
- US-A- 4 327 138

## Beschreibung

### Technisches Gebiet

Die Erfindung betrifft eine Polyurethan-basierte Zusammensetzung zur Verwendung als Klebstoff oder Füllmasse für elastische Substrate, die mindestens zwei Komponenten umfasst, und ein Polyurethanprepolymer als Bestandteil einer ersten Komponente, einen Härter als Bestandteil einer von der ersten physikalisch getrennten zweiten Komponente, ein Lösungsmittel und einen Weichmacher enthält, wobei der Härter ein einkerniges aromatisches Diamin umfasst, und in einer Menge vorliegt, so dass das Mol-Verhältnis aller Aminfunktionen im Diamin zu allen Isocyanatfunktionen im Klebstoff mindestens 0,7 zu 1 beträgt. Weiterhin betrifft die vorliegende Erfindung ein Verfahren zum Ausbessern von Fehlstellen wie Rissen oder Löchern in elastischen Substraten und zum Verkleben von elastischen Substraten sowie eine Verwendung der erwähnten Zusammensetzung zum Verkleben und Ausbessern von elastischen Substraten, insbesondere im Rahmen der Reparatur von Förderbändern.

### Hintergrund der Erfindung

Förderbandanlagen stellen das derzeit leistungsfähigste Transportmittel für feste Materialien in der Minenindustrie dar. Die Förderbandtechnologie hat im Laufe der Zeit sehr ausgeklügelte mechanische Anlagen entwickelt, die zum Beispiel Rahmen, Förderrollen, leerlaufende Rollen, Gänge, Aufzüge, Bandwagen, Schadenssensoren und Bremssysteme umfassen können. Darüber hinaus könne Förderbandanordnungen Haupt- oder Nebenleitungen aufweisen, die sowohl oberirdisch als auch unterirdisch verlaufen können.

Das Förderband ist dasjenige Element solcher Förderanlagen, das mit dem zu transportierenden Material in direkten Kontakt kommt. Es besteht normalerweise aus einem vielschichtigen Element, das mit unterschiedlichen Materialien verstärkt werden kann. Die Oberflächenschicht besteht in der Regel aus natürlichem oder synthetischem Gummi wie SBR oder einer Kombination davon. Darüber hinaus können abhängig von der jeweiligen Anwendung auch andere Materialien, wie Polymere oder Stahl, eingesetzt werden. Es gibt verschiedene Förderbandtypen für nasse und trockene Materialien, groß- und kleinteilige Materialien, Feststoffe unterschiedlicher Härte oder den Transport von Säuren.

Die Minenindustrie stellt die Industrie mit dem größten Bedarf an Förderbandanlagen dar. Insbesondere in den lateinamerikanischen Ländern wie Chile wird damit gerechnet, dass in den nächsten 10 Jahren ein stetiges Wachstum dieser Industrie erfolgt.

Bei Förderbandanlagen stellt deren "Verfügbarkeit" eine kritische Eigenschaft dar. Die "Verfügbarkeit" bezeichnet die Zeit, in der die Anlage effektiv genutzt werden kann, geteilt durch die gesamte verfügbare Zeit. Da Zeiten, in denen das Förderband nicht läuft, mit hohen Kosten einhergehen, besteht ein Bedarf, die Verfügbarkeit von Förderbändern zu optimieren.

Förderbänder unterliegen infolge ihrer Verwendung einem hohen Verschleiß, so dass Reparaturen von Rissen oder andere Beschädigungen häufig erforderlich sind. Viele der derzeit auf dem Markt verfügbaren Reparatursysteme auf der Basis von Polyurethanen weisen jedoch den Nachteil auf, dass sie nur relativ langsam aushärten oder sich nur unzureichend mit dem Material des Förderbands verbinden. Dies kann dazu führen, dass die Anlagen für eine Reparatur relativ lange stillstehen müssen, was mit erheblichen Kosten verbunden ist, da die Förderung für diesen Zeitraum unterbrochen werden muss. Es besteht daher ein Bedarf nach Reparatursystemen für Förderbänder, die möglichst schnell appliziert werden können und ebenso schnell aushärten, um damit die Standzeit der Förderbänder zu minimieren.

Gleichzeitig sollten die Reparatursysteme eine Shore-A-Härte aufweisen, die der der Fördermaterialien nahekommt, so dass eine einheitliche Oberfläche entsteht. Es hat sich gezeigt, dass Förderbänder mit einer Shore-A-Härte im Bereich von 50 bis 90 hinsichtlich ihres Verschleißes optimale Eigenschaften aufweisen.

Weiterhin besteht ein Bedarf nach Zusammensetzungen, die in einem weiten Temperaturbereich eingesetzt werden können. So werden Förderbänder in Gegenden genutzt, wie z.B. die Atacamawüste in Chile, in denen stark unterschiedliche Temperaturen herrschen können. Bei der Reparatur von Förderbändern ist es häufig nicht möglich einzelne Elemente oder das gesamte Band aus der Anlage auszubauen und zu einem Reparaturort zu transportieren. Für derartige Anwendungen ist es daher erforderlich das Band vor Ort unter den Umgebungsbedingungen zu reparieren. Dies bereitet insbesondere bei niedrigen Temperaturen unter 10°C Schwierigkeiten, da die verfügbaren Reparatursysteme bei diesen Temperaturen häufig schon sehr hochviskos sind und nur noch langsam aushärten. Es besteht daher ebenfalls ein Bedarf an Reparatursystemen für Förderbänder, die bei solchen niedrigen Temperaturen appliziert werden können und dennoch ausreichend reaktiv sind um eine schnelle Härtung zu ermöglichen.

Ein weiterer Nachteil von auf dem Markt verfügbaren Reparatursystemen ist es, dass diese häufig eine Formulierung mit CFCs (Chlorfluorkohlenwasserstoffe) erfordern. Deren Einsatz ist wegen des ozonschädigenden Potentials dieser Verbindungen heute nicht mehr zu rechtfertigen, insbesondere da ein Auffangen der CFC-Emissionen nicht möglich ist.

Die US 4,465,535 beschreibt ein Verfahren für die Reparatur von beschädigten Artikeln aus gehärtetem Gummi, bei dem die zu reparierende Stelle zunächst mit einem Halogen enthaltenden Oxidationsmittel behandelt und anschließend eine Reparaturzusammensetzung auf Basis eines Polyurethanprepolymers aufgebracht wird. Als Härter für diese Zusammensetzungen werden 4,4'-Methylendianilin (MDA) bzw. 2,3-Di-(4-aminophenyl)butan sowie Halogensalze dieser Amine beschrieben.

Die US 4,071,492 beschreibt Polyurethan/Harnstoff-Elastomere auf der Basis von Propylenoxid/Tetrahydrofuran-Copolymeren. Für die Herstellung solcher Elastomere werden zunächst hydroxyfunktionale Propylenoxid/Tetrahydrofuran-Copolymere mit Polyisocyanaten umgesetzt, die dann durch Zugabe von aromatischen Diaminen wie 4,4'-Methylendianilin weiter zu einem Elastomer umgesetzt werden.

In ähnlicher Weise beschreibt die US 4,327,138 ein Verfahren zur Reparatur von beschädigten Gegenständen aus Elastomeren, insbesondere von Reifen, bei dem ein härtbares Polymer oder Prepolymer verwendet und gegebenenfalls eine Vorbehandlung mit chlorierten Oxidationsmitteln durchgeführt wird. Als härtbare Prepolymere werden unter anderem Polyurethanprepolymere auf Basis von Polytetramethylenglycol beschrieben, die mit Verbindungen wie 4,4'-Methylenbis(2-chloranilin) oder 4,4'-Methylendianilin sowie Halogensalzkomplexen davon gehärtet werden. Die in den beiden vorstehenden Offenbarungen verwendeten Härter weisen jedoch den Nachteil hoher Giftigkeit auf.

In der US 4,345,058 sind Prepolymerzusammensetzungen auf Basis von Polyurethanprepolymeren, insbesondere Polytetramethylenglycol-basierten Polyurethanprepolymeren, in Kombination mit Weichmachern und Lösungsmitteln beschrieben, die mit Katalysatoren, wie 1,4-Diazabicyclo[2,2,2]octan, N,N,N-tetramethyl-1-3-butandiamin oder 1,2,4-trimethylpiperazin gehärtet werden.

Schließlich beschreibt die WO 2012/029029 eine flüssige Zusammensetzung für die Reparatur von Gummiprodukten und industriellen Beschichtungen, die auf einem Polyurethanprepolymer, einem Lösungsmittel, einem Pigment und einem Katalysator, wie insbesondere Diethyltoluylendiamin (DETDA) beruht. Gegenstand der Untersuchungen in dieser Offenbarung ist vor allem der Einfluss verschiedener Lösungsmittel auf die Applikation der Zusammensetzung, die deren Eigenschaften beeinflussen sollen. Verbindungen wie DETDA sind ebenfalls für andere Zwecke als dem eines Härters beschrieben worden. Beispielsweise sind in der US 2007/0276114 A1 aromatische Diamine, wie Diethyltoluylendiamin, als Thioxtropie induzierender Zusatzstoff beschrieben. Das Diamin bewirkt dabei eine Verdickung des Polyurethans, wenn dieses mit der Polyolhärterkomponente vermischt wird. Die US 2008/264541 A1 beschreibt Diethyltoluylendiamin als möglichen Kettenverlängerer für Polyurethanprepolymere. Bei den beiden vorbeschriebenen Anwendungen werden jedoch als Härterkomponente Polyole eingesetzt, so dass das Molverhältnis aller Aminfunktionen im Polyamin zu allen Isocyanatfunktionen in den Zusammensetzungen weniger als 0,7 : 1 beträgt.

Die vorliegende Erfindung löst diese Probleme.
Ein erster Aspekt der vorliegenden Erfindung betrifft eine Polyurethan-basierte Zusammensetzung mit mindestens zwei Komponenten umfassend
a) ein Polyurethanprepolymer als Bestandteil einer ersten Komponente, das eine Mischung von Reaktionsprodukten von Polyetherpolyolen mit einem aromatischen Polyisocyanat und Reaktionsprodukten von Polyesterpolyolen mit einem aromatischen Polyisocyanat ist,
b) einen Härter als Bestandteil einer von der ersten physikalisch getrennten zweiten Komponente,
c) ein Lösungsmittel, und
d) einen Weichmacher,
wobei der Härter ein einkerniges aromatisches Polyamin umfasst, und in einer Menge vorliegt, so dass das Mol-Verhältnis aller Aminfunktionen im Polyamin zu allen Isocyanatfunktionen in der Zusammensetzung mindestens 0,7 zu 1 beträgt.
"Einkernig" in Bezug auf ein aromatisches Polyamin bedeutet im Zusammenhang mit der vorliegenden Erfindung, dass die Aminfunktionen Substituenten desselben aromatischen Rings sind.

Die Anforderungen "ein Polyurethanprepolymer, ein Lösungsmittel, ....." sind nicht abschließend zu verstehen, d.h. es können ebenfalls Mischungen von verschiedenen Polyurethanprepolymeren oder Mischungen von Polyurethanprepolymeren mit anderen Polymeren, Mischungen von Lösungsmitteln, Mischungen von Weichmachern und ebenso Mischungen von Härtern eingesetzt werden.

Hinsichtlich des Lösungsmittels und des Weichmachers bestehen keine Beschränkungen hinsichtlich einer Aufteilung auf bestimmte Komponenten. Das Lösungsmittel und der Weichmacher können als Bestandteil der ersten, als Bestandteil der zweiten Komponente oder einer weiteren Komponente oder auf mehrere dieser Komponenten verteilt formuliert werden. Das Lösungsmittel sollte gegenüber dem Polyurethanprepolymer inert sein und keine reaktiven Gruppen wie beispielsweise OH-, NH- oder SH-Gruppen aufweisen.

Mit "Poly" beginnende Substanznamen wie Polyamin, Polyisocyanat oder Polyol bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch sogenannte Prepolymere, das heißt reaktive oligomere Voraddukte, deren funktionelle Gruppen am Aufbau von Makromolekülen beteiligt sind.

Der Begriff "Polyurethanpolymer" umfasst sämtliche Polymere, welche nach dem sogenannten Diisocyanat-Polyadditions-Verfahren hergestellt werden. Dies schließt auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Der Begriff "Polyurethanprepolymer" bezeichnet im Zusammenhang mit der vorliegenden Erfindung Polymere, die nicht abreagierte Isocyanatgruppen aufweisen und somit durch Zugabe eines Polyols oder Polyamins ausgehärtet werden können.

Ein geeignetes Polyurethanprepolymer ist erhältlich durch die Umsetzung von mindestens einem Polyisocyanat mit mindestens einem Polyol. Diese Umsetzung kann dadurch erfolgen, dass das Polyol und das Polyisocyanat mit üblichen Verfahren, beispielsweise bei Temperaturen von 50°C bis 100°C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchimetrischen Überschuss vorhanden sind. Vorteilhaft ist das Polyisocyanat so dosiert, dass ein NCO/OH-Verhältnis von 1,2 bis 5, insbesondere eines von 1,5 bis 3, eingehalten wird. Unter dem NCO/OH-Verhältnis wird hierbei das Verhältnis der Anzahl der eingesetzten Isocyanatgruppen zur Anzahl der eingesetzten Hydroxylgruppen verstanden. Bevorzugt verbleibt nach der Umsetzung aller Hydroxylgruppen des Polyols ein Gehalt an freien Isocyanatgruppen von 0,5 bis 8 Gewichts-%, bezogen auf das gesamte Polyurethanprepolymer.

Als Polyole für die Herstellung eines Polyurethanprepolymers können beispielsweise die folgenden handelsüblichen Polyole oder Mischungen davon eingesetzt werden:
- Polyoxyalkylenpolyole, auch Polyetherpolyole oder Oligoetherole genannt, welche Polymerisationsprodukte von Ethylenoxid, 1,2-Propylenoxid, 1,2- oder 2,3-Butylenoxid, Tetrahydrofuran oder Mischungen davon sind, eventuell polymerisiert mit Hilfe eines Startermoleküls mit zwei oder mehreren aktiven Wasserstoffatomen, wie beispielsweise Wasser, Ammoniak oder Verbindungen mit mehreren OH- oder NH-Gruppen, wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.

Besonders geeignet sind Polyoxyalkylendiole oder Polyoxyalkylentriole, insbesondere Polytetramethylenglycoldiole oder Polytetramethylenglycoltriole.

Speziell geeignet sind Polyoxyalkylendiole oder Polyoxyalkylentriole mit einem Ungesättigtheitsgrad von weniger als 0,02 mEq/g und mit einem Molekulargewicht im Bereich von 250 bis 5.000 g/mol. Im Rahmen der vorliegenden Erfindung hat es sich gezeigt, dass ein Polytetramethylenoxidpolyol im Polyurethanprepolymer vorzugsweise ein Molekulargewicht M_{w} im Bereich von etwa 250 bis 4000 g/mol sowie vorzugsweise von etwa 500 bis 3000 g/mol, und besonders bevorzugt von etwa 1000 bis 2000 aufweist. Weist das Polytetramethylenpolyol ein Molekulargewicht von unter 250 g/mol auf, so führt dies dazu, dass das Material nur noch schwer verarbeitet werden kann.

Wird hingegen ein Polytetramethylenpolyol mit einem Molekulargewicht von mehr als 2000 eingesetzt, so weisen die resultierenden Produkte keine optimale Härte auf.

Wenn im Vorstehenden von einem Molekulargewicht die Rede ist, so wird zu dessen Bestimmung die GPC-Methode verwendet. Dies gilt ebenso für andere im Zusammenhang mit dieser Erfindung erwähnten Molekulargewichte für Polymere.

Weitere im Zusammenhang mit der Erfindung zweckmäßig in das Polyurethanprepolymer einzubeziehende Polyole umfassen:
- Polyesterpolyole, auch Oligoesterole genannt, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1,-Trimethylolpropan oder Mischungen der vorgenannten Alkohole mit organischen Dicarbonsäuren oder deren Anhydride oder Ester wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton.
- Polyacrylat- oder Polymethacrylatpolyole.
- Polykohlenwasserstoffpolyole, auch Oligohydrocarbonole genannt, wie beispielsweise polyhydroxyfunktionelle Ethylen-Propylen-, Ethylen-Butylen- oder Ethylen-Propylen-Dien-Copolymere, wie sie beispielsweise von der Firma Kraton Polymers hergestellt werden, oder polyhdroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, wie beispielsweise solche, die durch Copolymerisation von 1,3-Butadien oder Allylalkohol hergestellt werden und auch hydriert sein können.
- Polyhydroxyfunktionelle Acrylonitril/Polybutadien-Copolymere, wie sie beispielsweise aus Epoxiden oder Aminoalkoholen und carboxylterminierten Acrylonitril/Polybutadien-Copolymeren (kommerziell erhältlich unter dem Namen Hycar® CTBN von Noveon) hergestellt werden können.

Diese genannten Polyole weisen bevorzugt ein mittleres Molekulargewicht von 250 - 30.000 g/mol, insbesondere von 1.000 - 30.000 g/mol, und weisen bevorzugt eine mittlere OH-Funktionalität im Bereich von 1,6 bis 3 auf.

Zusätzlich zu diesen genannten Polyolen können kleine Mengen von niedrigmolekularenl zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethlyolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des Polyurethanprepolymers mitverwendet werden.

Als Polyisocyanate für die Herstellung des Polyurethanprepolymers können handelsübliche aliphatische, cycloaliphatische oder aromatische Polyisocyanate, insbesondere Diisocyanate, verwendet werden, beispielsweise die folgenden:
1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3- und -1,4-diisocyanat und beliebige Gemische dieser Isomeren, 1-Isocyanato-3,3,5-trimethyl-5-isocyanatomethyl-cyclohexan (= Isophorondiisocyanat oder IPDI), Perhydro-2,4'- und -4,4'-diphenylmethandiisocyanat (HMDI), 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-1-methylenethyl)naphthalin, 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Oligomere und Polymere der vorgenannten Isocyanate, sowie beliebige Mischungen der vorgenannten Isocyanate. Bevorzugt sind MDI, TDI, HDI und IPDI.

In einer bevorzugten Ausführungsform handelt es sich bei dem Polyurethanprepolymer um das Reaktionsprodukt von mindestens einem Polyisocyanat und mindestens einem Polytetramethylenglycolpolyol. Das Polyisocyanat ist ein aromatisches Polyisocyanat, insbesondere TDI oder MDI (Toluylendiisocyanat bzw. Diphenylmethandiisocyanat). Besonders bevorzugt handelt es sich bei dem Isocyanat um TDI.

Das Polyurethanprepolymer ist ein Gemisch von Reaktionsprodukten von Polyetherpolyolen, vorzugsweise Polytetramethylenglycolpolyolen, mit einem aromatischen Polyisocyanat, vorzugsweise TDI, und Polyesterpolyolen mit einem aromatischen Polyisocyanat, vorzugsweise TDI, eingesetzt. In dem Gemisch entfallen vorzugsweise etwa 40 bis 75 Gew.-%, besonders bevorzugt etwa 50 bis 70 Gew.-% und ganz besonders bevorzugt 60 bis 70 Gew.-% auf das Polyetherpolyol basierte Polyurethaneprepolymer. Der Rest entfällt auf das Polyesterpolyol basierte Polyurethaneprepolymer.

Das erfindungsgemäße Polyurethanprepolymer weist bevorzugt einen Isocyanatgehalt von 2-8 %, besonders bevorzugt von 2.2-7.5 % auf. Wenn ein wie im vorstehenden beschriebenes Gemisch eingesetzt wird, so weist das auf Polyesterpolyolen basierende Prepolymer vorzugsweise einen Isocyanatgehalt von etwa 3 ± 0,5 % auf, während das auf Polyetherpolyolen basierende Prepolymer einen Isocyanatgehalt von etwa 6 ± 0,5 % aufweist.

Der Gehalt des Polyurethanprepolymers in der Polyurethan-basierten Zusammensetzung bezogen auf deren Gesamtgewicht liegt vorzugsweise im Bereich von 40 bis 94 Gew.-%, besonders bevorzugt 50 bis 85 Gew.-% und am meisten bevorzugt 60 bis 80 Gew.-%.

Der Härter in der Polyurethan-basierten Zusammensetzung gemäß der vorliegenden Erfindung liegt vorzugsweise in Form eines aromatischen Diamins vor. Mit "aromatisches Amin" ist im Sinne der vorliegenden Erfindung gemeint, dass das Amin-Stickstoffatom über eine kovalente Bindung mit einem aromatischen Ring verbunden ist. Weiterhin ist es bevorzugt, wenn das Polyamin mindestens eine und bevorzugt zwei primäre Aminfunktionen aufweist.

Bevorzugt handelt es sich bei dem aromatischen Diamin um 2,4- oder 2,6-Diethyltoluylendiamin oder 2,4- oder 2,6-Dimethylthiotoluylendiamin.

Die erwähnten Härter haben sich gegenüber aliphatischen Aminhärtern, wie DABCO (Diazabicyclononan), meta-Xylidendiamin (MXDA) und Triethylentetraamin, als deutlich reaktiver und damit wirkungsvoller herausgestellt. Zudem weisen die resultierenden Produkte hinsichtlich ihrer Bruchdehnung wesentlich höhere Werte auf, als dies bei den aliphatischen Aminhärtern der Fall ist.

Ebenso ist es im Rahmen der vorliegenden Erfindung bevorzugt, dass der Härter möglichst frei von giftigen Aminen, wie beispielsweise 4,4'-Methylendianilin oder Methylen-bis-(o-Chloranilin), ist. Als Vorteil von einkernige aromatische Polyaminen gegenüber zweikernigen aromatischen Polyaminen, d.h. Polyaminen, in denen die Aminfunktionen Substituenten verschiedener aromatischer Ringe sind, hat es sich zudem überraschend herausgestellt, dass verbesserte Härten des resultierenden Produkts sowohl nach kurzer Zeit (1 Stunde) als auch nach vollständiger Aushärtung (24 Stunden) der Zusammensetzung erzielt werden.

Hinsichtlich der Menge des Härters unterliegt die vorliegende Erfindung keinen wesentlichen Beschränkungen. Es ist jedoch bevorzugt, dass der Härter in einer Menge von 4 bis 12 Gew.-%, besonders bevorzugt 5 bis 9 Gew.-%, und am meisten bevorzugt 6 bis 8,5 Gew.-% in der Zusammensetzung enthalten ist.

Das Mol-Verhältnis der Aminfunktionen im Härter zu den Isocyanatfunktionen in der Zusammensetzung beträgt mindestens 0,7 zu 1, bevorzugt mindestens 0,8 zu 1, insbesondere mindestens 0,9 zu 1 und besonders bevorzugt mindestens 0,95 zu 1. Auf der anderen Seite führt ein großer Überschuss der Aminfunktionen gegenüber den Isocyanatfunktionen dazu, das sich Polymere mit geringerer Molmasse bilden, was sich ungünstig auf die Eigenschaften des Materials auswirken kann. Daher sollte das Mol-Verhältnis der Aminfunktionen im Härter zu den Isocyanatfunktionen in der Zusammensetzung nicht mehr als 1,2 zu 1, bevorzugt nicht mehr als 1,1 zu 1 betragen. Am meisten bevorzugt ist es wenn das Verhältnis etwa 1:1 beträgt. Demzufolge sollte der Härter zu einer möglichst vollständigen Abreaktion der Isocyanatgruppen führen, und nicht nur eine Kettenverlängerung des Polyurethanprepolymers bewirken.

Dem Lösungsmittel kommt im Zusammenhang mit der vorliegenden Erfindung ebenfalls eine wesentliche Bedeutung zu. Mit dem Lösungsmittel lässt sich einerseits eine günstige Verarbeitungsviskosität einstellen. Andererseits sollte das Lösungsmittel und dessen Menge so gewählt werden, dass dessen Verdampfen die Härtung der Zusammensetzung nicht verzögert oder behindert.

Erfindungsgemäß in die Polyurethan-basierten Zusammensetzung einzubeziehende Lösungsmittel umfassen insbesondere nicht aromatische Lösungsmittel, bevorzugt in Form von Ethylacetat, Aceton, 4-Methylpentanon, Cyclohexanon, 1,4-Dioxan, Methylethylketon, Essigsäure, Tetrahydrofuran, Dimethylacetamid, Chloroform, Decalin, Dimethylformamid, Heptan, Diisopropylether, Ethanol, Cyclohexan, Hexan, Methylisobutylketon sowie Trichlorethylen. Geeignet und im Rahmen der vorliegenden Erfindung bevorzugt sind aber auch aromatische Lösungsmittel, insbesondere in Form von Benzol, Xylol oder Toluol. Von diesen sind Trichlorethylen und Benzol auf Grund ihrer Giftigkeit weniger bevorzugt.

Bevorzugt umfasst das Lösungsmittel eine Kombination aus Ethylacetat und Xylol, besonders bevorzugt eine Kombination aus Ethylacetat und Xylol mit Heptan oder Trichlorethylen.

Hinsichtlich des Gehalts an Lösungsmittel unterliegt die vorliegende Erfindung ebenfalls keinen wesentlichen Beschränkungen. Es ist jedoch bevorzugt, den Lösungsmittelgehalt so anzupassen, dass sich eine geeignete Viskosität für die Verarbeitung einstellt. Gleichzeitig sollte der Lösungsmittelgehalt nicht höher als nötig sein, da das Lösungsmittel bei oder nach der Applikation verdampft. Als geeignet hat sich ein Lösungsmittelgehalt von 1 bis 60 Gew.-%, vorzugsweise 5 bis 30 Gew.-%, und besonders bevorzugt 10 bis 20% bezogen auf das Gesamtgewicht der Polyurethan-basierten Zusammensetzung herausgestellt.

Als weiteren erforderlichen Bestandteil enthält die erfindungsgemäße Zusammensetzung mindestens einen Weichmacher. Geeignete Weichmacher sind beispielsweise Carbonsäureester, wie Phthalate, insbesondere Dioctylphthalat, Diisononylphthalat, Dibutylphthalat oder Adipate, wie beispielsweise Dioctyladipat, Acelate und Sebacate, Polyole, beispielsweise Polyoxyalkylenalpolole oder Polyesterpolyole, organische Phosphor- und Sulfonsäureverbindungen oder Polybutene sowie aromatische Alkohole, wie Benzylalkohol oder NCO-blockierte Polyurethanprepolymere auf Basis von TDI wie Poluren LP 100 LV oder Poluren LP 100 von Sapici (Italien.

Der Gehalt des Weichmacher sollte, muss aber nicht notwendigerweise, im Bereich von 1 bis 20 Gew.-%, vorzugsweise 2 bis 15 Gew.-% und besonders bevorzugt 3 bis 10 Gew.-%, und insbesondere 4 bis 7 Gew.-%, bezogen auf das Gesamtgewicht der Zusammensetzung, liegen.

Ein im Zusammenhang mit der vorliegenden Erfindung besonders geeigneter Weichmacher ist das Dibutylphthalat.

Neben diesen erforderlichen Bestandteilen kann die Polyurethan-basierte Zusammensetzung weitere Bestandteile enthalten. Solche Bestandteile sind beispielsweise organische und anorganische Füllstoffe, zum Beispiel gemahlene oder gefällte Calciumcarbonate, welche gegebenenfalls mit Stearaten beschichtet sind, Kaoline, Aluminiumoxide, Kieselsäuren, insbesondere hochdisperse Kieselsäuren aus Pyrolyseprozessen, PCV-Pulver oder Hohlkugeln. Im Rahmen der vorliegenden Erfindung hat es sich als zweckmäßig herausgestellt, wenn die erfindungsgemäßen Zusammensetzungen keine wesentlichen Mengen an Füllstoffen enthalten, vorzugsweise weniger als 10 Gew.-%, insbesondere bevorzugt weniger als 5%, und am meisten bevorzugt weniger als 1 Gew.-% Füllstoffe. Bei Formulierungen, in denen keine Füllstoffe wie Calciumkarbonat und/oder Kaolin zugegeben wurden, wurden die besten Eigenschaften hinsichtlich einer nach 60 Minuten erzielbaren Shore-A-Härte sowie einer Bruchdehnung nach einem Tag erzielt. Füllstoffe umfassen im Rahmen dieser Erfindungen keine Pigmente, wie sie im Folgenden beschrieben sind.

Ebenso kann die erfindungsgemäße Zusammensetzung Pigmente wie Ruße, insbesondere industriell hergestellte Ruße (im Folgenden als Ruß bezeichnet), oder schwarzes Eisenoxid enthalten. Solche Pigmente können zweckmäßig mit einem Gehalt von bis zu 8 Gew.-%, bevorzugt im Bereich von 0,5 bis 6 Gew.-% und besonders bevorzugt im Bereich von 2 bis 3,5 Gew.-% in die Zusammensetzung einbezogen werden.

Die erfindungsgemäßen Zusammensetzungen können darüber hinaus Rheologie-Modifikator, wie beispielsweise Verdickungsmittel, zum Beispiel Harnstoffverbindungen, Polyamidwachse, Bentonite oder pyrogene Kieselsäuren, wie beispielsweise Aerosil 200 oder Aerosil R972, enthalten.

Zudem können Trocknungsmittel, wie beispielsweise Calciumoxid, Molekularsiebe, Zeolithe, hochreaktive Isocyanate, wie p-Tosylisocyanat, Orthoameisensäure, Alkoxysilane, wie Tetraethoxysilane, Organoalkoxysilane, wie Trimethoxysilan und Organoalkoxysilane, welche in alpha-Stellung zur Silangruppe eine funktionelle Gruppe aufweisen, eingesetzt werden, p-Tosylisocyanat ist beispielsweise als "Additive Ti" von OMG Borchers GmbH erhältlich. Ein geeignetes Zeolith-Trocknungsmittel ist "Baylith L-Pulver" von UOP CH Sarl.

Den erfindungsgemäßen Zusammensetzungen können auch zusätzliche Haftvermittler, wie insbesondere Organoalkoxysilane, wie beispielsweise Epoxysilane, Vinylsilane, (Methyl)acrylsilane, Isocyanatosilane, e oligomere Formen dieser Silane, zugesetzt werden. Ebenso können Stabilisatoren gegen Wärme, Licht und UV-Strahlung sowie flammhemmende oder oberflächenaktive Substanzen, wie beispielsweise Netzmittel, Verlaufsmittel, Entlüftungsmittel oder Entschäumer beigemischt werden. Kommerziell erhältliche Entschäumer sind beispielsweise BYK 300, BYK 540 und BYK A 501 von BYK sowie Mitell S und Schewo foam 6351 von Schwegmann.

Eine bevorzugte erfindungsgemäße Zusammensetzung enthält neben den genannten erforderlichen Bestandteilen einen oder mehrere Zusatzstoffe, ausgewählt aus Entschäumern, Füllstoffen, Pigmenten, Rheologiemodifikatoren und wasserabsorbierenden Mitteln.

Im Rahmen der vorliegenden Erfindung ist es weiterhin bevorzugt, wenn die Zusammensetzung nach dem Aushärten für eine Stunde eine Shore-A-Härte (gemessen nach ASTM D 2240) von mindestens 60, vorzugsweise mindestens 70, und eine Bruchdehnung nach 24 h (gemessen nach ASTM D 412) von mindestens 300%, vorzugsweise mindestens 350%, aufweist. In einer besonders bevorzugten Ausführungsform liegt die Bruchdehnung im Bereich von etwa 400 bis etwa 700%. Alternativ dazu oder kumulativ liegt die Shore-A-Härte nach 60 Minuten vorzugsweise in einem Bereich von etwa 60 bis etwa 90, bevorzugt 70-80.

Wie vorstehend beschrieben, liegen die einzelnen Bestandteile der beschriebenen Zusammensetzung in Form von mindestens zwei Komponenten vor, wobei die Einzelbestandteile auf mehrere physikalisch voneinander getrennte Behältnisse aufgeteilt sind. Vorzugsweise liegen die Bestandteile der Zusammensetzung in Form von zwei Komponenten vor.

Ein geeignetes Mischungsverhältnis der beiden Komponenten hängt im Wesentlichen von der jeweiligen Zusammensetzung der beiden Komponenten ab. Die das Polyurethanprepolymer enthaltende Komponente härtet auch allein mit Luftfeuchtigkeit aus, während die zweite Komponente zu einer starken Beschleunigung der Aushärtungsgeschwindigkeit der Zusammensetzung führt. Daher sollte das Mischungsverhältnis der beiden Komponenten so gewählt werden, dass die erste Komponente, die das Polyurethanprepolymer enthält (im folgenden Komponente A), in einer wesentlich größeren Menge als die zweite Komponente, die den Härter enthält (im folgenden Komponente B), in der Zusammensetzung vorhanden ist. Bevorzugt ist ein Mischungsverhältnis im Bereich von 100 Gewichtsteilen der ersten Komponente zu 1 bis 20 Gewichtsteilen der Komponente B, besonders bevorzugt 100 Gewichtsteilen der Komponente A zu 5 bis 10 Gewichtsteilen der Komponente B.

Wie vorstehend bereits angedeutet kann die erfindungsgemäße Zusammensetzung mit Vorteil als Füllmasse oder Klebstoff eingesetzt werden.

Ein weiterer Aspekt der vorliegenden Erfindung betrifft daher ein Verfahren zum Verkleben von elastischen Substraten, umfassend
a) Vermischen einer Zusammensetzung wie vorstehend beschrieben,
b) Beschichten eines Substrat S1 mit der Zusammensetzung,
c) Inkontaktbringen des mit der Zusammensetzung beschichteten Teil des Substrats S1 mit einem Substrat S2 derart, dass die Zusammensetzung zwischen den beiden Substraten angeordnet ist, und
d) Aushärten der Zusammensetzung.

Alternativ dazu kann auch zunächst das Substrat S2 mit der Zusammensetzung beschichtet und anschließend mit dem Substrat S1 in Kontakt gebracht werden. Ebenso ist es möglich, beide Substarte S1 und S2 mit der Zusammensetzung zu beschichten. Danach werden die zu verklebenden Teile gefügt, worauf die Zusammensetzung aushärtet. Hierbei ist darauf zu achten, dass das Fügen der Teile innerhalb der sogenannten Offenzeit erfolgt, um zu gewährleisten, dass beide Fügeteile verlässlich miteinander verklebt werden.

Bei dem Substrat S1 handelt es sich vorzugsweise um ein elastisches Material, wie insbesondere um natürliches oder synthetisches Gummi, insbesondere Kautschuk, EPDM , NBR, SBR, SBS oder SIS. Bei dem Substrat S2 kann es sich um ein anderes Material oder um das gleiche Material wie S1 handeln. Bevorzugt bestehen S1 und S2 aus dem gleichen Material.

Ein weiterer Aspekt der vorliegenden Erfindung betrifft, wie bereits angedeutet, ein Verfahren zum Ausbessern von Fehlstellen wie Rissen oder Löchern in elastischen Substraten umfassend
a) Vermischen einer Polyurethan-basierten Zusammensetzung wie vorstehend beschrieben,
b) Einbringen der Zusammensetzung in die Fehlstellen, und
c) Aushärten der Zusammensetzung.
Unter "Fehlstellen" wird eine oder mehrere Fehlstellen verstanden.

Im Rahmen der vorliegenden Erfindung hat es sich herausgestellt, dass die Haftung der Klebstoffmasse auf dem Substrat verbessert werden kann, indem das Substrat zunächst mit einem halogenhaltigen Haftvermittler vorbehandelt wird. Geeignete halogenhaltige Haftvermittler sind beispielsweise Halogenenthaltende Oxidationsmittel wie N-Halogensulfonamide, N-Halogenhydantoine, N-Halogenamide, and N-Halogenimide. Beispiele von N-Halogensulfonamide sind N,N,N',N'-Tetrachlor-oxybis (benzolsulfonamid), N,N,N',N'-Tetrachlor-4,4-biphenyl disulfonamid, N,N,N',N'-Tetrachlor-1,3-benzol disulfonamid, und N,N,N',N'-tetrabrom-oxybis(benzolsulfonamid). Beispiele von N-Halogenhydantoinen umfassen 1,3-Dichlor-5,5-dimethyl hydantoin, 1,3-Dibrom-5,5-dimethyl hydantoin, 1,3-Dichlor-5-methyl-5-isobutyl hydantoin, und 1,3-Dichlor-5-methyl-5-hexyl hydantoin. Beispiele von N-Halogenamiden sind N-Bromacetamid und Tetrachlorglycoluril. Beispiele von N-Halogenimiden sind N-Bromsuccinimid und die verschiedenen Mono-, Diand Trichlorisocyanursäuren oder Mischungen davon. Ein bevorzugtes Halogen enthaltendes Oxidationsmittel ist die Trichlorisocyanursäure die ebenfalls als Trichlor-s-triazinetrion oder genauer als 1,3,5-Trichlor-s-triazine-2,4,6-trion bekannt ist.

Der Haftvermittler wird konventionell als Lösung aufgebracht und das Substrat wird abgelüftet, bevor der Klebstoff oder die Füllmasse aufgetragen wird. Durch die Vorbehandlung mit einem derartigen Haftvermittler wird überraschenderweise gegenüber herkömmlichen Haftvermittlern eine verbesserte Haftung des Klebstoffs gewährleistet. Vor dem Auftragen des Haftvermittlers kann das Substrat zweckmäßig gereinigt und/oder aufgeraucht werden.

Ein weiterer Aspekt der vorliegenden Erfindung betrifft schließlich die Verwendung einer wie vorstehend beschriebenen Zusammensetzung zum Verkleben oder Ausbessern von Fehlstellen, insbesondere Rissen oder Löchern, in elastischen Substraten. Hinsichtlich bevorzugter derartiger Substrate wird auf die vorstehenden Ausführungen zu den Verfahren verwiesen. In einer besonders bevorzugten Ausführungsform handelt es sich bei dem elastischen Substrat um den Bestandteil eines Förderbands, besonders bevorzugt eines Förderbands in der Minenindustrie.

Im Folgenden wird die vorliegende Erfindung durch Beispiele näher illustriert, die jedoch nicht den Schutzumfang der Anmeldung in irgendeiner Art und Weise beeinträchtigen sollen.

### Beispiele

### Beschreibung der Prüfmethoden

Die Gelzeit wurde anhand einer Testprobe von 100 g Komponente A+B bestimmt, indem die Mischung in ein thermisch isoliertes Gefäß (aus Styropor) gestellt und alle 30 Sekunden manuell mit einem Spatel gut durchgerührt wurde. Diese wurde über einen Zeitrum von insgesamt 5 Minuten wiederholt, wenn dies möglich war. Die Gelzeit ist die Zeit, in der es nicht mehr möglich ist, den Spatel einfach zu bewegen.

Die Shore-A-Härte nach 60 Minuten und 24 Stunden wurde anhand der ASTM D 2240 (Standardtest für Gummieigenschaften, Durometerhärte) oder DIN 53505 für weiche Materialien an drei Punkten des Materials bestimmt.

Die Viskosität nach 1 bzw. 7 Tagen wurde mit Hilfe eines Brookfield-Viskosimeters (200 ml Probe), Spindel 3, bei 20°C und 20 UpM bestimmt. Die Werte sind in MPa s⁻¹ angegeben.

Die Bruchdehnung nach einem Tag wurde mit Hilfe der ASTM D 412 bestimmt. Ein Stück des Produkts wurde in eine Form gemäß ASTM D 412 geschnitten und in einer QZtech BST-2000-Testmaschine eingespannt. Die Dehnung wurde unter konstanter Kraft erhöht, bis das Produkt brach, was durch das Gerät automatisch registriert wurde.

Die Festigkeitsstärke oder Klebekraft zu natürlichem Gummi, synthetischem Gummi und Fasern wurde mit einem Verfahren analog ASTM 1876-01 bestimmt. Alle Vorbereitungen/Messungen wurden bei 20° und 35 bis 50% relativer Luftfeuchtigkeit ausgeführt. Die Prüfkörper wurden bei 20°C und 40% relativer Luftfeuchtigkeit vorbereitet und bei 20°C vermessen. Die Messung wird im Folgenden näher beschrieben:
Herstellung des T Schäl Testkörpers: Zwei Oberflächen von 305 x 152 mm wurden mit Hilfe der Zusammensetzung verklebt, wobei die Dicke der Zusammensetzung etwa 0,8 mm betrugt und eine obere Zone ohne Zusammensetzung von 76 mm freigelassen wurde. Die Oberflächen stammen von Förderbändern der Serie EP 200 und enthalten eine Gummidicke von 5,5 mm und einen Nylonabdeckung von 6 mm. Die Produkte wurden sowohl für eine Gummi-Gummi- als auch eine Abdeckung-Abdeckung-Verklebung überprüft.
Anwendung: Der Haftvermittler (Trichlorcyanursäure) wurde auf die Oberfläche aufgebracht. Nach kurzem Ablüften wurde innerhalb 10 Minuten das Produkt in einer Dicke von 5 bis 6 mm auf die Oberfläche aufgebracht. Dieses Produkt wurde für mindestens 1 bis zu 4 Stunden bei 20° gehärtet.
Vorbereitung der Messung: Nach Härtung wurde der T-Schäl-Testkörper in eine Breite von 25 mm (pro Testkörper) geschnitten und weiter für 1,3 bzw. 7 Tage gehärtet.
Messung: Der vorstehend beschriebene Testkörper wurde in der QZtech BTS-2000 Testmaschine eingespannt und einem konstanten Zug ausgesetzt, wobei die Kraft für ein Auseinanderziehen von 127 mm Länge (in kg/mm) bestimmt wurde. Die Werte sind in kg force bzw. kiloponds angegeben.

Bei den folgenden Beispielen sind die einzelnen Bestandteile der Polyurethanprepolymerkomponente sind als Komponente A bezeichnet, während der Härter als Komponente B bezeichnet ist. Für die Herstellung der Komponente A wurden das Polyurethanprepolymer, das Lösungsmittel, der Weichmacher und gegebenenfalls Pigmente, Füllstoffe, Entschäumer sowie Modifikatoren und Trocknungsmittel vermischt. Anschließend wurde die das Polyurethanprepolymer enthaltende Komponente A mit der Härterkomponente B vermischt.

Vergleichsbeispiele 1 bis 10:
Eine Übersicht über die Zusammensetzungen der Vergleichsbeispiele 1 bis 10 findet sich in der folgenden Tabelle 1.

Die Vergleichsbeispiele 1 bis 5, in denen an Stelle eines Prepolymers Polyole einerseits und Isocyanate andererseits eingesetzt wurden, zeigen eine relativ geringe Shore-A-Härte nach 60 Minuten sowie ebenfalls eine nur geringe Bruchdehnung von bis zu 280. Während im Vergleichsbeispiel 6 die Bruchdehnung auf 400 gesteigert werden konnte, zeigt auch diese Zusammensetzung nur eine geringe Shore-A-Härte. Zusätzlich steigt bei Vergleichsbeispiel 6 die Gelzeit signifikant an, was auf eine langsame Aushärtung hindeutet. Für die Reparatur von Förderbändern sind entsprechende Materialien daher relativ wenig geeignet.

Die Vergleichsbeispiele 7 bis 9 enthalten kein Lösungsmittel und zeigen gegenüber den Vergleichsbeispielen 1 bis 6 insgesamt höhere Shore-A-Härten nach 60 Minuten. Die Bruchdehnungswerte sind jedoch mit bis zu 320 immer noch sehr gering. Durch Zusatz des Lösungsmittels im Vergleichsbeispiel 10 konnte sowohl die Bruchdehnung als auch die Shore-A-Härte weiter verbessert werden. Dieses Vergleichsbeispiel enthält gegenüber den erfindungsgemäßen Zusammensetzungen keinen Weichmacher.

**Tabelle 1**

| Teil der Komponente | Funktion | Rohmaterial | | | | | | | | | | |
|---|---|---|---|---|---|---|---|---|---|---|---|---|
| | | | V1 | V2 | V3 | V4 | V5 | V6 | V7 | V8 | V9 | V10 |
| | | | | | | | | | | | | |
| B | Katalysator | Dabco ¹⁾ | 0,1% | 0,1% | 0,1% | 0,1% | 0,1% | | | | | |
| B | Katalysator | MXDA ²⁾ | 0,6% | 0,5% | 0,6% | 0,5% | 0,6% | | | | | |
| B | Katalysator | TETA ³⁾ | 0,2% | | | | | | | | | |
| A | Entschäumer | BYK A 501 | | | | | | | 0,9% | 0,9% | 0,9% | 0,9% |
| A | Füllstoff | Calciumcarbonat | | | | | | | 49,9% | 50,2% | 22,4% | 19,6% |
| A | Füllstoff | Kaolin | 29,5% | 24,0% | 28,2% | 26,1% | 27,2% | | | | | |
| B | Härter | DETDA ⁴⁾ | | | | | | | | 3,9% | 6,5% | 6,9% |
| B | Härter | DMTDA ⁵⁾ | | | | | | | 4,6% | | | |
| A | Pigment | Schwarzes Eisenoxid | 0,5% | 0,4% | 0,5% | 0,5% | 0,5% | | | | | |
| A | Pigment | Russ | | | | | | | 1,7% | 1,7% | 4,7% | 3,7% |
| A | Weichmacher | Benzylalkohol | 4,1% | | | | | | | | | |
| A | Weichmacher | DBP ⁶⁾ | 0,1% | 0,1% | 0,1% | 0,1% | 0,1% | | | | | |
| A | Weichmacher | Hirenol PL 50 | | 28,8% | 17,5% | 12,9% | 4,2% | | | | | |
| A | Polyol | 1,4 Butanodiol | 2,4% | 2,0% | 2,3% | 2,1% | 2,2% | | | | | |
| A | Polyol | Rhizinusölbasis ⁷⁾ | | | | 8,6% | 12,6% | 60,0% | | | | |
| A | Polyol | Polyetherpolyol ⁸⁾ | 36,5% | 29,7% | 34,9% | 32,3% | 33,6% | | | | | |
| A | Prepolymer | Polyether-TDI ⁹⁾ | | | | | | | | | | 31,7% |
| A | Prepolymer | Polyether-TDI ¹⁰⁾ | | | | | | | 43,0% | 43,3% | 65,4% | 31,7% |
| A | Reologiemodifikator | Pyrogene Kieselsäure ¹¹⁾ | | | | | | | | | | |
| A | Reologiemodifikator | Pyrogene Kieselsäure ¹²⁾ | 1,1% | 0,9% | 1,0% | 1,0% | 1,0% | | | | | |
| A | Lösungsmittel | MIBK ¹³⁾ | | | | | | | | | | 5,6% |
| A | Lösungsmittel | Xylol | 8,1% | | | | | | | | | |
| A | Wasser Absorbenz | Additive TI | | | | | | | | | | |
| A | Wasser Absorbenz | Baylith L pulver | 2,2% | 1,8% | 2,1% | 1,9% | 2,0% | | | | | |
| | | MDI | 14,6% | 11,7% | 12,6% | 13,8% | 15,8% | 40,0% | | | | |
| **TOTAL** | | | 100,0% | | | | | | | | | |

| | | | | | | | | | | | | |
|---|---|---|---|---|---|---|---|---|---|---|---|---|
| 1) Diazabicyclo[2.2.2]octan, 2) meta-Xylidendiamin, 3) Triethylentetramin, 4) Diethyltoluylendiamin, 5) Dimethylthiotoluylendiamin, 6) Dibutylphthalat, 7) verzweigtes rhizinusölbasiertes Polyol, 8) lineares Polypropylenoxid-Polyethyleneoxid Polyol, Ethyleneoxid-terminiert, mit einer theoretischen OH-Funckonalität von 2 und einem mittleren Molekulargewicht of etwa 4000, 9) auf Basis eines Polytetramethylenglycoldiols, NCO-Gehalt von 6,25 %, 10) NCO-Gehalt von 4,4 %, 11) spezifische Oberfläche von 200 m²/g, 12) spezifische Oberfläche von 110 m²/g, 13) Methylisobutylketon. | | | | | | | | | | | | |

Die Ergebnisse der Bestimmung der Gelzeit, der Shore-A-Härte sowie der Bruchdehnung sind in der folgenden Tabelle 2 dargestellt.

**Tabelle 2**

| TESTS | | | | | | | | | | |
|---|---|---|---|---|---|---|---|---|---|---|
| Versuchnummer | V1 | V2 | V3 | V4 | V5 | V6 | V7 | V8 | V9 | V10 |
| Gelzeit | 15 | 5 | 4 | 4 | 3 | 25 | 10 | 2 | 2 | 1,5 |
| Shore A Härte 60 Minuten | 50 | 50 | 65 | 55 | 60 | 40 | 50 | 60 | 70 | 75 |
| Shore A Härte 24 Stunden | 50 | 60 | 70 | 65 | 70 | 50 | 55 | 70 | 75 | 80 |
| Bruchdehnung [%] 1 Tag | 180 | 220 | 250 | 250 | 220 | 400 | 300 | 300 | 320 | 350 |

### Beispiele 1 bis 7 und Vergleichsbeispiel 11:

Die Zusammensetzungen dieser Beispiele sind in der folgenden Tabelle 3 wiedergegeben:

**Tabelle 3**

| Teil von | Funktion | Roh Material | | | | | | | | |
|---|---|---|---|---|---|---|---|---|---|---|
| | | | 1 | 2 | 3 | 4 | 5 | 6 | 7 | V11 |
| | | | | | | | | | | |
| A | Entschäumer | BYK 300 | | | | | 1.4% | | | |
| A | Entschäumer | BYK 540 | | | 0,6% | 0,9% | | 0,5% | | |
| A | Entschäumer | BYK A 501 | 0,6% | 0,6% | | | | | | |
| A | Entschäumer | Mitell S | | | | | | | 0,4% | 0,4% |
| A | Entschäumer | Schewo foam 6351 | | | | | 1.4% | | | |
| A | Füllstoff | Calcium carbonate | 24,4% | | | | | | | |
| B | Härter | DETDA ¹⁾ | 6,0% | 6,4% | 6,4% | 7,1% | 7.1% | 7,4% | 7,4% | |
| B | Härter | Methylendianilin (MDA) | | | | | | | | 7,4% |
| A | Pigment | Schwarzes Eisenoxid | | | | | | 0,6% | 1,1% | 1,1% |
| A | Pigment | Russ | 5,1% | 1,3% | 1,9% | 1,9% | 1.9% | 1,6% | 1,5% | 1,5% |
| A | Weichmacher | DBP ²⁾ | 9,4% | 5,6% | 5,6% | 5,6% | | 4,5% | 5,9% | 5,9% |
| A | Weichmacher | POLURENE LP 100 LV ³⁾ | | | 10,7% | 10,2% | 10.2% | 8,2% | | |
| A | Weichmacher | Polurene LP100 ³⁾ | | 15,0% | | | | | | |
| A | Prepolymer | Polyether-TDI ⁴⁾ | 47,0% | | 33,7% | 44,6% | 44.6% | 47,1% | 46,1% | 46,1% |
| A | Prepolymer | Polyester-TDI ⁵⁾ | | 33,7% | 33,7% | 22,3% | 22.3% | 23,1% | 22,6% | 22,6% |
| A | Lösungsmittel | Ethyl Acetate | | 3,7% | 7,5% | 7,4% | 11.2% | 6,4% | 6,8% | 6,8% |
| A | Lösungsmittel | MIBK ⁶⁾ | 7,5% | 33,7% | | | | | | |
| A | Lösungsmittel | Xylol | | | | | | | 8,3% | 8,3% |
| A | Wasser Absorbenz | Additive TI | | | | | | 0,6% | | |

| | | | | | | | | | | |
|---|---|---|---|---|---|---|---|---|---|---|
| 1) Diethyltoluylendiamin, 2) Dibutylphthalat, 3) PU-Prepolymer mit blockierten NCO, 4) auf Basis eines Polytetramethylenglycoldiols, NCO-Gehalt 6,25 %, 5) NCO-Gehalt 2,9 %, 6) Methylisobutylketon. | | | | | | | | | | |

Beispiele 1 und 2 sind Referenzbeispiele. Die Eigenschaften der Zusammensetzungen wurden wie vorstehend beschrieben bestimmt und sind in der folgenden Tabelle 4 wiedergegeben:

**Tabelle 4**

| TESTS | | | | | | | | |
|---|---|---|---|---|---|---|---|---|
| Versuchsnummer | 1 | 2 | 3 | 4 | 5 | 6 | 7 | V11 |
| Gelzeit | 1 | 3 | 4 | 3 | 3 | 3 | 3 | 1 |
| shore A Härte 60 Minuten | 75 | 60 | 50 | 70 | 70 | 70 | 70 | 55 |
| shore A Härte 24 Stunden | 90 | 70 | 65 | 80 | 80 | 80 | 85 | 70 |
| Bruchdehnung [%] 1 Tag | 350 | 450 | 450 | 400 | 450 | 400 | 600 | 670 |
| Viskosität (3/25/25) 1 Tag | | | 4000 | 3500 | 3200 | 3500 | 2600 | |
| Viskosität (3/25/25) 7 Tage | | | 8500 | 7500 | 9000 | 7000 | 6000 | |

Im Vergleich zu Beispiel 1 enthält die Zusammensetzung nach Beispiel 2 keinen Füllstoff. Der Vergleich der Beispiele zeigt, dass durch das Weglassen des Füllstoffs ein wesentlich verbesserter Bruchdehnungswert erzielt werden kann. Das Beispiel 1 weist zudem mit einer Gelzeit von nur 1 Minute einen sehr kurzen Verarbeitungszeitraum auf, was ungünstig ist. Der verbesserte Bruchdehnungswert bestätigt sich in den folgenden Beispielen 3 bis 7, die ebenfalls keinen Füllstoff enthalten. Zudem zeigt das Beispiel 7 mit 600% einen ausgezeichneten Bruchdehnungswert sowie mit einer Shorehärte nach 60 Minuten von 70 ebenfalls sehr gute Eigenschaften in diesem Bereich. Das Vergleichsbeispiel 11, das an die Zusammensetzung von Beispiel 7 angelehnt ist und sich von dieser nur durch den Härter (anstelle von DETDA wurde MDA in gleichem Molverhältnis der Aminogruppen zu den Isocyanatgruppen eingesetzt) unterscheidet, zeigt eine gegenüber Beispiel 7 noch leicht verbesserte Bruchdehnung. Als äußert nachteilig erweist sich bei diesem Vergleichsbeispiel jedoch die sehr geringe Gelzeit von nur 1 Minute. Zudem zeigt dieses Beispiel nach vergleichbarer Härtungszeit (60 Min und 24 Stunden) um etwa 20% geringere Shore A Härten als Beispiel 7.

### Beispiele 8 bis 12:

In den Beispielen 8 bis 12 wurde der Effekt von Lösungsmittelzusätzen auf die Eigenschaften der erfindungsgemäßen Zusammensetzungen untersucht. Die Zusammensetzungen sind in der folgenden Tabelle 5 wiedergegeben:

**Tabelle 5**

| Teil der | Funktion | Roh Material | | | | | |
|---|---|---|---|---|---|---|---|
| | | | 8 | 9 | 10 | 11 | 12 |
| | | | | | | | |
| A | Entschäumer | Mitell S | 0,3% | 0,3% | 0,3% | 0,3% | 0,3% |
| B | Härter | DETDA ¹⁾ | 7,4% | 7,4% | 7,4% | 7,4% | 7,4% |
| A | Piqment | Schwarzes Eisenoxid | 0,9% | 0,9% | 0,9% | 0,9% | 0,9% |
| A | Pigment | Russ | 1,8% | 1,8% | 1,8% | 1,8% | 1,8% |
| A | Weichmacher | DBP ²⁾ | 5,6% | 5,6% | 5,6% | 5,6% | 5,6% |
| A | Prepolymer | Polyether-TDI ³⁾ | 47,1% | 47,1% | 47,1% | 47,1% | 47,1% |
| A | Prepolymer | Polyester-TDI ⁴⁾ | 23,1% | 23,1% | 23,1% | 23,1% | 23,1% |
| A | Lösungsmittel | Ethylacetat | 5,6% | 5,6% | 5,6% | 5,6% | 5,6% |
| A | Lösungsmittel | Heptan | | | 2,8% | 1,4% | |
| A | Lösungsmittel | Hexan | | 2,8% | | 1,4% | |
| A | Lösungsmittel | Toluol | | | | | 2,8% |
| A | Lösungsmittel | Trichlorethylen | 2,8% | | | | |
| A | Lösungsmittel | Xylol | 5,6% | 5,6% | 5,6% | 5,6% | 5,6% |
| A | Wasser Absorbenz | Additive TI | | | | | |

| | | | | | | | |
|---|---|---|---|---|---|---|---|
| 1) Diethyltoluylenldiamin, 2) Dibutylphthalat, 3) auf Basis eines Polytetramethylenglycoldiols, NCO-Gehalt: 6,25 %, 4) NCO-Gehalt: 2,9 %. | | | | | | | |

Die Eigenschaften dieser Zusammensetzungen sind in der folgenden Tabelle 6 wiedergegeben:

**Tabelle 6**

| TESTS | | | | | |
|---|---|---|---|---|---|
| Versuchsnummer | 8 | 9 | 10 | 11 | 12 |
| Gelzeit | | | | | |
| shore A Härte 60 Minuten | 70 | 70 | 70 | 70 | 70 |
| shore A Härte 24 Stunden | 85 | 85 | 85 | 85 | 85 |
| Bruchdehnung [%] 1 Tag | 600 | 600 | 600 | 600 | 650 |
| Viskosität (3/25/25) 1 Tag | 2700 | 2800 | 2700 | 2600 | 2400 |
| Viskosität (3/25/25) 7 Tage | 5800 | 6000 | 6000 | 6000 | 5500 |
| Klebekraft zu natürlichem Gummi 1 Tag (Kgf) | 10 | 6 | 8 | 7 | 13 |
| Klebekraft zu synthetischem Gummi 1 Tag (Kgf) | 7 | 3,5 | 4 | 3,5 | 3 |
| Klebekraft zu Fasern 1 Tag (Kgf) | 8 | 4 | 6 | 5 | 3 |

Es zeigt sich, dass, während fast einheitliche Shore-A-Härten und Bruchdehnungen erzielt werden, wesentliche Unterschiede im Klebeverhalten gegenüber verschiedenen Substraten beobachtet werden konnten. Abhängig vom verwendeten Lösungsmittelgemisch ergeben sich insbesondere Unterschiede in der Haftung. Enthält das Lösungsmittelgemisch Trichlorethylen, werden insgesamt die besten Klebeverbindungen zu natürlichem Gummi, synthetischem Gummi und Fasermaterialien erhalten. Dieses Lösungsmittel weist aber aufgrund seiner Giftigkeit in der Anwendung Nachteile auf.

## Patentansprüche

1. Polyurethan-basierte Zusammensetzung mit mindestens zwei Komponenten umfassend
a) ein Polyurethanprepolymer als Bestandteil einer ersten Komponente, das eine Mischung von Reaktionsprodukten von Polyetherpolyolen mit einem aromatischen Polyisocyanat und Reaktionsprodukten von Polyesterpolyolen mit einem aromatischen Polyisocyanat ist,
b) einen Härter als Bestandteil einer von der ersten physikalisch getrennten zweiten Komponente
c) ein Lösungsmittel und
d) einen Weichmacher,
wobei der Härter ein einkerniges aromatisches Polyamin umfasst, bei dem die Aminfunktionen Substituenten desselben aromatischen Rings sind, und der Härter in einer Menge vorliegt, so dass das Mol-Verhältnis aller Aminfunktionen im Polyamin zu allen Isocyanatfunktionen in der Zusammensetzung mindestens 0,7 zu 1 beträgt.

2. Polyurethan-basierte Zusammensetzung gemäß Anspruch 1, **dadurch gekennzeichnet, dass** das Polyurethanprepolymer das Reaktionsprodukt von mindestens einem aromatischen Polyisocyanat und mindestens einem Polyetherpolyol, vorzugsweise einem Polytetramethylenglycolpolyol, umfasst.

3. Polyurethan-basierte Zusammensetzung gemäß Anspruch 1 oder 2, **dadurch gekennzeichnet, dass** das Polyurethanprepolymer 40 bis 94 Gew.-%, vorzugsweise 50 bis 85 Gew.-% und besonders bevorzugt 60 bis 80 Gew.-% der Zusammensetzung ausmacht.

4. Polyurethan-basierte Zusammensetzung gemäß einem der Ansprüche 1 bis 3, **dadurch gekennzeichnet, dass** der Härter in Form eines Diamins vorliegt.

5. Polyurethan-basierte Zusammensetzung gemäß einem der vorstehenden Ansprüche, **dadurch gekennzeichnet, dass** der Härter in einer Menge von 4 bis 12 Gew.-%, vorzugsweise 5 bis 9 Gew.-% und besonders bevorzugt 6 bis 8,5 Gew.-%, bezogen auf das Gesamtgewicht der Zusammensetzung, vorliegt.

6. Polyurethan-basierte Zusammensetzung gemäß einem der vorstehenden Ansprüche, **dadurch gekennzeichnet, dass** das Lösungsmittel ein aromatisches Lösungsmittel umfasst.

7. Polyurethan-basierte Zusammensetzung gemäß einem der vorstehenden Ansprüche, **dadurch gekennzeichnet, dass** das Lösungsmittel in einer Menge von 1 bis 60 Gew.-%, vorzugsweise 5 bis 30 Gew.-% und besonders bevorzugt 10 bis 20 Gew.-%, bezogen auf das Gesamtgewicht der Zusammensetzung, vorliegt.

8. Polyurethan-basierte Zusammensetzung gemäß einem der vorstehenden Ansprüche, **dadurch gekennzeichnet, dass** der Weichmacher in einer Menge von 1 bis 20 Gew.-%, vorzugsweise 2 bis 15 Gew.-% und besonders bevorzugt 3 bis 7 Gew.-%, bezogen auf das Gesamtgewicht der Zusammensetzung, vorliegt.

9. Polyurethan-basierte Zusammensetzung gemäß einem der vorstehenden Ansprüche, **dadurch gekennzeichnet, dass** die Zusammensetzung nach Aushärten für 1 Stunde eine Shore-A-Härte, bestimmt gemäß ASTM D2240, von mindestens 60, vorzugsweise mindestens 70, und eine Bruchdehnung nach einem Tag, bestimmt gemäß ASTM D412 von mindestens 300 %, vorzugsweise mindestens 350 %, aufweist.

10. Polyurethan-basierte Zusammensetzung gemäß einem der vorstehenden Ansprüche, **dadurch gekennzeichnet, dass** die Zusammensetzung zusätzlich einen oder mehrere Zusatzstoffe ausgewählt aus Entschäumern, Füllstoffen, Pigmenten, Reologiemodifikatoren und Wasser absorbierenden Mitteln enthält.

11. Verfahren zum Ausbessern von Fehlstellen in elastischen Substraten umfassend
a) Vermischen einer Zusammensetzug gemäß einem der Ansprüche 1 bis 10,
b) Einbringen der Zusammensetzung in die Fehlstellen, und
c) Aushärten der Zusammensetzung.

12. Verfahren zum Verkleben von elastischen Substraten umfassend
a) Vermischen einer Zusammensetzung gemäß einem der Ansprüche 1 bis 10,
b) Beschichten eines Substrat S1 und gegebenenfalls eines Substrats S2 mit der Zusammensetzung,
c) Inkontaktbringen des mit der Zusammensetzung beschichteten Teils des Substrats S1 mit einem Substrat S2 derart, dass die Zusammensetzung zwischen den beiden Substraten angeordnet ist, und
d) Aushärten der Zusammensetzung.

13. Verfahren gemäß Anspruch 11 oder 12, **dadurch gekennzeichnet, dass** das gegebenenfalls gereinigte Substrat vor dem Aufbringen der Zusammensetzung mit einem Haftvermittler, vorzugsweise einem chlorhaltigen Haftvermittler, besonders bevorzugt mit Trichlorisocyanursäure, behandelt wird.

14. Verwendung einer Zusammensetzung gemäß einem der Ansprüche 1 bis 10 zum Ausbessern von Fehlstellen in elastischen Substraten oder zum Verkleben von elastischen Substraten.

15. Verwendung gemäß Anspruch 14, **dadurch gekennzeichnet, dass** das elastische Substrat Bestandteil eines Förderbandes ist.

16. Polyurethan-basierte Zusammensetzung gemäß einem der Ansprüche 1 - 10, **dadurch gekennzeichnet, dass** in dem Gemisch 60 bis 75 Gew.-% auf das Polyetherpolyol basierte Polyurethanprepolymer entfallen, und der Rest auf das Polyesterpolyol basierte Polyurethanprepolymer entfällt.

## Claims

1. A polyurethane-based composition having at least two components, comprising
a) a polyurethane prepolymer as a constituent of a first component, which prepolymer is a mixture of reaction products of polyether polyols with an aromatic polyisocyanate and reaction products of polyester polyols with an aromatic polyisocyanate,
b) a curing agent as a constituent of a second component that is physically separate from the first component,
c) a solvent, and
d) a plasticizer,
wherein the curing agent comprises a mononuclear aromatic polyamine, wherein the amine functions are substituents of the same aromatic ring, and the curing agent is present in an amount such that the molar ratio of all amine functions in the polyamine to all isocyanate functions in the composition is at least 0.7 to 1.

2. The polyurethane-based composition according to claim 1, **characterized in that** the polyurethane prepolymer comprises the reaction product of at least one aromatic polyisocyanate and at least one polyether polyol, preferably a polytetramethylene glycol polyol.

3. The polyurethane-based composition according to claim 1 or 2, **characterized in that** the polyurethane prepolymer constitutes 40 to 94% by weight, preferably 50 to 85% by weight and particularly preferably 60 to 80% by weight of the composition.

4. The polyurethane-based composition according to any one of claims 1 to 3, **characterized in that** the curing agent is present in the form of a diamine.

5. The polyurethane-based composition according to any one of the preceding claims, **characterized in that** the curing agent is present in an amount of 4 to 12% by weight, preferably 5 to 9% by weight and particularly preferably 6 to 8.5% by weight, based on the total weight of the composition.

6. The polyurethane-based composition according to any one of the preceding claims, **characterized in that** the solvent comprises an aromatic solvent.

7. The polyurethane-based composition according to any one of the preceding claims, **characterized in that** the solvent is present in an amount of 1 to 60% by weight, preferably 5 to 30% by weight and particularly preferably 10 to 20% by weight, based on the total weight of the composition.

8. The polyurethane-based composition according to any one of the preceding claims, **characterized in that** the plasticizer is present in an amount of 1 to 20% by weight, preferably 2 to 15% by weight and particularly preferably 3 to 7% by weight, based on the total weight of the composition.

9. The polyurethane-based composition according to any one of the preceding claims, **characterized in that** the composition has, after curing for 1 hour, a Shore A hardness, determined according to ASTM D2240, of at least 60, preferably at least 70, and an elongation at break after one day, determined according to ASTM D412, of at least 300%, preferably at least 350%.

10. The polyurethane-based composition according to any one of the preceding claims, **characterized in that** the composition additionally contains one or more additives selected from defoamers, fillers, pigments, rheology modifiers and water-absorbing agents.

11. A method for repairing defects in elastic substrates, comprising
a) mixing a composition according to any one of claims 1 to 10,
b) introducing the composition into the defects, and
c) curing the composition.

12. A method for bonding elastic substrates, comprising
a) mixing a composition according to any one of claims 1 to 10,
b) coating a substrate S1 and optionally a substrate S2 with the composition,
c) contacting the portion of the substrate S1 coated with the composition with a substrate S2, such that the composition is disposed between the two substrates, and
d) curing the composition.

13. The method according to claim 11 or 12, **characterized in that** prior to applying the composition the optionally cleaned substrate is treated with a adhesion promoter, preferably a chlorine-containing adhesion promoter, particularly preferably with trichloroisocyanuric acid.

14. Use of a composition according to any one of claims 1 to 10 for the repair of defects in elastic substrates or for bonding elastic substrates.

15. Use according to claim 14, **characterized in that** the elastic substrate is part of a conveyor belt.

16. The polyurethane-based composition according to any one of claims 1-10, **characterized in that** 60 to 75% by weight of the mixture is accounted for by the polyether polyol-based polyurethane prepolymer, and the balance by the polyester polyol-based polyurethane prepolymer.

## Revendications

1. Composition à base de polyuréthane contenant au moins deux composants, comprenant :
a) un prépolymère de polyuréthane en tant que constituant d'un premier composant, qui est un mélange de produits de réaction de polyéther-polyols avec un polyisocyanate aromatique et de produits de réaction de polyester-polyols avec un polyisocyanate aromatique,
b) un durcisseur en tant que constituant d'un deuxième composant séparé physiquement du premier,
c) un solvant et
d) un plastifiant,
le durcisseur comprenant une polyamine aromatique mononucléaire, dans laquelle les fonctions amino sont des substituants du même cycle aromatique, et le durcisseur étant présent en une quantité telle que le rapport en moles entre toutes les fonctions amino dans la polyamine et toutes les fonctions isocyanate dans la composition soit d'au moins 0,7 sur 1.

2. Composition à base de polyuréthane selon la revendication 1, **caractérisée en ce que** le prépolymère de polyuréthane comprend le produit de réaction d'au moins un polyisocyanate aromatique et d'au moins un polyéther-polyol, de préférence d'un polytétraméthylène-glycol-polyol.

3. Composition à base de polyuréthane selon la revendication 1 ou 2, **caractérisée en ce que** le prépolymère de polyuréthane représente 40 à 94 % en poids, de préférence 50 à 85 % en poids et de manière particulièrement préférée 60 à 80 % en poids, de la composition.

4. Composition à base de polyuréthane selon l'une quelconque des revendications 1 à 3, **caractérisée en ce que** le durcisseur se présente sous la forme d'une diamine.

5. Composition à base de polyuréthane selon l'une quelconque des revendications précédentes, **caractérisée en ce que** le durcisseur est présent en une quantité de 4 à 12 % en poids, de préférence de 5 à 9 % en poids et de manière particulièrement préférée de 6 à 8,5 % en poids, par rapport au poids total de la composition.

6. Composition à base de polyuréthane selon l'une quelconque des revendications précédentes, **caractérisée en ce que** le solvant comprend un solvant aromatique.

7. Composition à base de polyuréthane selon l'une quelconque des revendications précédentes, **caractérisée en ce que** le solvant est présent en une quantité de 1 à 60 % en poids, de préférence de 5 à 30 % en poids et de manière particulièrement préférée de 10 à 20 % en poids, par rapport au poids total de la composition.

8. Composition à base de polyuréthane selon l'une quelconque des revendications précédentes, **caractérisée en ce que** le plastifiant est présent en une quantité de 1 à 20 % en poids, de préférence de 2 à 15 % en poids et de manière particulièrement préférée de 3 à 7 % en poids, par rapport au poids total de la composition.

9. Composition à base de polyuréthane selon l'une quelconque des revendications précédentes, **caractérisée en ce que** la composition présente après durcissement pendant 1 heure une dureté Shore A, déterminée selon ASTM D2240, d'au moins 60, de préférence d'au moins 70, et un allongement à la rupture après une journée, déterminé selon ASTM D412, d'au moins 300 %, de préférence d'au moins 350 %.

10. Composition à base de polyuréthane selon l'une quelconque des revendications précédentes, **caractérisée en ce que** la composition contient en outre un ou plusieurs additifs, choisis parmi les antimousses, les charges, les pigments, les modificateurs de rhéologie et les agents absorbant l'eau.

11. Procédé de réparation de défauts dans des substrats élastiques, comprenant :
a) le mélange d'une composition selon l'une quelconque des revendications 1 à 10,
b) l'introduction de la composition dans les défauts et
c) le durcissement de la composition.

12. Procédé de collage de substrats élastiques, comprenant :
a) le mélange d'une composition selon l'une quelconque des revendications 1 à 10,
b) le revêtement d'un substrat S1 et éventuellement d'un substrat S2 avec la composition,
c) la mise en contact de la partie du substrat S1 revêtue avec la composition avec un substrat S2, de telle sorte que la composition soit agencée entre les deux substrats, et
d) le durcissement de la composition.

13. Procédé selon la revendication 11 ou 12, **caractérisé en ce que** le substrat éventuellement nettoyé est traité avant l'application de la composition avec un promoteur d'adhésion, de préférence un promoteur d'adhésion contenant du chlore, de manière particulièrement préférée avec de l'acide trichloroisocyanurique.

14. Utilisation d'une composition selon l'une quelconque des revendications 1 à 10 pour la réparation de défauts dans des substrats élastiques ou pour le collage de substrats élastiques.

15. Utilisation selon la revendication 14, **caractérisée en ce que** le substrat élastique est un constituant d'une bande de transport.

16. Composition à base de polyuréthane selon l'une quelconque des revendications 1 à 10, **caractérisée en ce que** le mélange contient 60 à 75 % en poids du prépolymère de polyuréthane à base de polyéther-polyol, le reste étant constitué par le prépolymère de polyuréthane à base de polyester-polyol.
